# EUROPEAN PATENT APPLICATION

(11) **EP 4 644 037 A1**
(43) Date of publication of application: **05.11.2025**
(21) Application number: 25737991.7
(22) Date of filing: 04.03.2025
(51) Int. Cl.: B23P 15/00, H04M 1/02

(54) **TECHNOLOGY FOR PROCESSING MOBILE PHONE MIDDLE FRAME MADE OF TITANIUM-ALUMINUM COMPOSITE MATERIAL**

(30) Priority: 14.03.2024 CN 202410290299
(71) Applicant: Jiangsu Kangrui New Material Technology Co., Ltd., Jiangyin City, Wuxi, Jiangsu 214400 (CN); Kangrui New Materials Technology (Nantong) Co., Ltd., Nantong, Jiangsu 216500 (CN)
(72) Inventor: ZHU, Wei, Wuxi, Jiangsu 214400 (CH); WANG, Zhengwei, Wuxi, Jiangsu 214400 (CH); LI, Pengfei, Wuxi, Jiangsu 214400 (CH); LIU, Laiyuan, Wuxi, Jiangsu 214400 (CH); LIU, Rong, Wuxi, Jiangsu 214400 (CH)
(74) Representative: Bardehle Pagenberg S.L.
(86) International application number: PCT/CN2025/080473
(87) International publication number: WO 2025/190111

(57) **Abstract**

The present invention relates to the technical field of mobile phone middle frame manufacture, and particularly relates to a process for manufacturing a titanium aluminum composite for a mobile phone middle frame, comprising: using a titanium aluminum composite strip formed by connecting two layers of composites of titanium and aluminum as a frame of the mobile phone middle frame, and using an aluminum plate as an inner side plate connected in the frame of the mobile phone middle frame; wherein the titanium layer in the titanium aluminum composite strip is located outside the frame of the mobile phone middle frame, and the aluminum layer in the titanium aluminum composite strip is located inside the frame of the mobile phone middle frame; and the frame of the mobile phone middle frame is connected to the inner side plate of the mobile phone middle frame by friction stir welding. The present invention improves the overall performance of the mobile phone middle frame.

## Description

### TECHNICAL FIELD

The present invention relates to the technical field of mobile phone middle frame manufacturing, specifically to a process for manufacturing a titanium aluminum composite for a mobile phone middle frame.

### BACKGROUND ART

The mobile phone middle frame is a frame body located between the front screen of the mobile phone and the rear cover of the back of mobile phone, and plays the role of protecting the inner main board of the mobile phone. Therefore, a better strength requirement is required. In addition, since the outer periphery of the mobile phone middle frame is exposed, the requirements for its appearance and resistance to scratching and falling are also relatively high. Furthermore, in order to improve the market competitiveness, it is also required that the mobile phone middle frame has higher production efficiency and lower manufacturing cost. Therefore, the comprehensive performance of the mobile phone middle frame is required to be high. Currently, the mobile phone middle frame is mostly made of a single material or alloy, which is forged or pressed through a die and then subjected to CNC machining, thereby forming the final mobile phone middle frame product. However, the traditional single material or alloy does not have high comprehensive performance, so it is an important way to improve the comprehensive performance of the mobile phone middle frame by using a composite.

### SUMMARY OF THE INVENTION

In order to solve the above-mentioned problems, the present invention proposes a process for manufacturing a titanium aluminum composite for a mobile phone middle frame, aiming to improve the overall performance requirements of the mobile phone middle frame. The specific technical solutions are as follows:
a process for manufacturing a titanium aluminum composite for a mobile phone middle frame, including using a titanium aluminum composite strip formed by connecting two layers of composites of titanium and aluminum as a frame of the mobile phone middle frame, and using an aluminum plate as an inner side plate connected in the frame of the mobile phone middle frame; wherein the titanium layer in the titanium aluminum composite strip is located outside the frame of the mobile phone middle frame, and the aluminum layer in the titanium aluminum composite strip is located inside the frame of the mobile phone middle frame; and the frame of the mobile phone middle frame is connected to the inner side plate of the mobile phone middle frame by friction stir welding.

Preferably, the titanium aluminum composite strip is a titanium aluminum composite strip formed by roll-bonding a titanium strip as a titanium layer and an aluminum strip as an aluminum layer.

In the present invention, the frame of the mobile phone middle frame is a combined frame formed by splicing a plurality of titanium aluminum composite strips; the plurality of titanium aluminum composite strips include at least one bending-type titanium aluminum composite strip of U-shaped bending-type titanium aluminum composite strips and L-shaped bending-type titanium aluminum composite strips.

As one of the preferred solutions of the frame of the mobile phone middle frame, the frame of the mobile phone middle frame is a combined frame formed by splicing four titanium aluminum composite strips. Two of the four titanium aluminum composite strips are straight strip-type titanium aluminum composite strips, and the other two of the four titanium aluminum composite strips are bending-type titanium aluminum composite strips formed by bending the titanium aluminum composite strips. The two straight strip-type titanium aluminum composite strips are arranged in parallel and spaced apart, and two ends of the two bending-type titanium aluminum composite strips are respectively connected to two ends of the two straight strip-type titanium aluminum composite strips so as to form the frame of the mobile phone middle frame.

Wherein two bending-type titanium aluminum composite strips of the four titanium aluminum composite strips are U-shaped bending strips.

As the second preferred solution of the frame of the mobile phone middle frame, the frame of the mobile phone middle frame is a combined frame formed by splicing three titanium aluminum composite strips. The three titanium aluminum composite strips are all bending-type titanium aluminum composite strips formed by bending the titanium aluminum composite strips. In the three titanium aluminum composite strips, two are L-shaped bending strips, and the other one is U-shaped bending strip. The two short sides of the two L-shaped bending strips are connected, and the long sides are respectively connected to two ends of the U-shaped bending strips so as to form the frame of the mobile phone middle frame.

In the present invention, the thickness of the frame of the mobile phone middle frame is set to be equal to the thickness of the aluminum plate, and then the desired final product shape of the mobile phone middle frame is obtained by further manufacturing (including machining the inner side plate).

In the present invention, the manufacturing of the titanium aluminum composite for the mobile phone middle frame at least includes the following procedures in sequence: fixed-length cutting, bending, dressing, assembly welding, and machining; wherein the welding is friction stir welding, and the dressing including dressing front and rear surfaces of a bending portion of the bending-type titanium aluminum composite strip, and removing a thickened portion of a bending portion thickness caused by bending.

Preferably, prior to the fixed-length cutting, the long titanium aluminum composite strip long-support is subjected to double-side grinding using a double-side grinding equipment to remove burrs by a grinding process.

Preferably, the fixed-length cutting is carried out by taking the titanium aluminum composite strip long-support as a blank, straightening the strip, and then cutting the strip with a set length. During welding, a welding positioning tool is used. Wherein the plurality of titanium aluminum composite strips and aluminum plate are placed in the welding positioning tool for positioning and fixing, and then, the friction stir welding is performed.

Preferably, the burr removing procedure may be added after the bending and before the dressing. Preferably, the burr removing procedure is achieved by using a double-side grinding equipment. Preferably, the dressing is a material-retained forging deformation dressing method implemented without removing a metal material, wherein the material-retained forging deformation dressing method is performed by forging deformation such that the thickened portion of the bending portion thickness caused by bending is removed by forging deformation while a constricted portion of an outer rounded surface of the bending portion caused by bending is compensated.

Wherein the specific steps of the material-retained forging deformation dressing method are as follows: an inner side surface of the bending-type titanium aluminum composite strip located at the bending portion is used as a positioning benchmark; the inner side surface of the bending-type titanium aluminum composite strip located at the bending portion is positioned against a positioning die adapted to the inner side surface of the bending portion; then, the front and rear surfaces of the bending portion of the bending-type titanium aluminum composite strip are flattened by forging, so that the thickened portion of the bending portion thickness caused by bending is removed by forging deformation while the constricted portion of the outer rounded surface of the bending portion caused by bending is compensated.

Preferably, the positioning die is provided with a positioning groove adapted to the bending portions of the bending-type titanium aluminum composite strips, and the material-retained forging deformation dressing method is performed by, after the bending portion of the bending-type titanium aluminum composite strip is positioned in the positioning groove of the positioning die, forging and flattening the front and rear surfaces of the bending portion of the bending-type titanium aluminum composite strip.

In the friction stir welding process, as one of the improved schemes of the process for manufacturing a titanium aluminum composite for a mobile phone middle frame of the present invention, during the friction stir welding process, when the stirring pin inserted into a welding seam on the friction stir welding equipment moves to the region where the titanium aluminum composite strips are spliced, the stirring pin is set to move at a slower speed.

Preferably, the moving speed when a stirring pin moves to a region where the titanium aluminum composite strips are spliced is decreased by more than 40%.

Preferably, the moving speed when a stirring pin moves to a region where the titanium aluminum composite strips are spliced is decreased to 80-150 mm/min.

As the second improved scheme of the process for manufacturing a titanium aluminum composite for a mobile phone middle frame of the present invention, during the friction stir welding process, when the stirring pin inserted into a welding seam on the friction stir welding equipment moves to the region where the titanium aluminum composite strips are spliced, a movement trajectory of the stirring pin in the splicing region is provided with an offset amount in a direction perpendicular to the movement trajectory with respect to a movement trajectory of the stirring pin in other regions, and the offset amount is offset in a direction more toward a side of the region where the titanium aluminum composite strips are spliced.

Preferably, the offset is 0.2-1.0 mm.

More preferably, the offset is 0.5 mm.

As the third improved scheme of the process for manufacturing a titanium aluminum composite for a mobile phone middle frame of the present invention in the present invention, a double-side grinding procedure and a first CNC machining procedure are provided in sequence after the dressing and before the assembling; the machining after welding includes a second CNC machining; a stress relieving treatment procedure and a double-side grinding procedure are successively provided after welding and before the second CNC machining; the double-side grinding is performed using a double-side grinding equipment; and the stress relieving treatment procedure includes performing a stress relieving treatment by means of a solid solution and aging heat treatment.

By adding a solid solution treatment (480-540°C) after the welding, the aluminum alloy is heated to a high-temperature single-phase region and maintained at a constant temperature, so that the excess phase is sufficiently dissolved into the solid solution, and then rapidly cooled, to obtain a supersaturated solid solution. After aging treatment (180°C), the supersaturated solid solution is decomposed and a fine and dispersed strengthening phase is precipitated, so as to release the stress and improve the strength and hardness.

Considering that friction welding is locally heated along the welding trajectory, some areas will experience temperature rise and volume expansion, while the surrounding unheated or slower temperature rising areas will limit their expansion, resulting in interactive forces inside the metal, namely thermal stress. From the microscopic point of view, the increase in temperature increases the thermal movement of the metal atoms and the distance between the atoms, while the atoms in the unheated part keep the original state, which results in the change of the relative position between the atoms and the generation of thermal stress. The thermal stress will cause severe deformation of the post-process CNC machining flatness. To this end, the following improvements have been made.

As the fourth improved scheme of the process for manufacturing a titanium aluminum composite for a mobile phone middle frame of the present invention, the stress relieving treatment process includes a stress relieving treatment achieved by an inner panel deforming under pressure to create grooves method, wherein the inner panel deforming under pressure to create grooves method includes: applying pressure on the front and back surfaces of the inner side plate of the titanium aluminum composite for the mobile phone middle frame by using a molding head with a plurality of strip-shaped protrusions, and deforming the front and back surfaces of the inner side plate under pressure to create a plurality of recessed grooves.

Preferably, the plurality of recessed grooves form a combination of vertical and horizontal grooves.

More preferably, the grooves have a depth of 0.1-0.5 mm.

The working principle of the above-mentioned inner panel deforming under pressure to create grooves method so as to realize the stress relieving treatment is: after the mobile phone middle frame is welded, a tensile stress is formed in the inner side plate under the pulling action of the contraction of the welding seam. By deforming the inner side plate under pressure and creating a plurality of recessed grooves on the inner side plate, a compressive stress can be generated which counteracts the internal tensile stress of the inner side plate, thereby achieving the stress relieving treatment.

Preferably, the combination of the steps of solid solution and aging heat treatment after friction stir welding and deforming under pressure to create grooves is as follows: friction welding→ T4 (solid solution)→ deforming under pressure to create grooves → T6 (aging) →double-side grinding processing to remove the grooves.

During welding, the friction stir welding is performed by welding from a friction stir welding starting position at a splicing joint adjacent to the titanium aluminum composite strip, welding a ring along the periphery of the joint between the frame of the mobile phone middle frame and the inner side plate of the mobile phone middle frame, and then withdrawing the welding from the splicing joint or withdrawing from the aluminum plate as a removal area of the subsequent CNC machining.

In the present invention, the welding positioning tool includes a base and a positioning groove provided on the upper plane of the base; and the splicing assembly of the mobile phone middle frame is integrally positioned in the positioning groove of the base.

Further improvements of the friction stir welding process for the present invention include the following measures:
(1) a main shaft of the friction stir welding equipment rotates counterclockwise, and the stirring pin is fed counterclockwise along the welding trajectory;
(2) before friction stir welding, the product is preheated to 100-200°C;
(3) the forging pressure in the welding process is increased, and pressure control (0.9-1.1 tons) is performed.

As one of the preferred solutions of the welding positioning tool of the present invention, the welding positioning tool further includes a push block and at least two OK clamps arranged on the base, and the at least two OK clamps are respectively arranged at two adjacent side positions of the positioning groove. The positioning groove formed by a welding cavity, a push block cavity, and a plurality of locking cavities is arranged in the base. Mounting holes are arranged at four corners of the base. A piece to be welded of the mobile phone middle frame is arranged in the positioning groove. The push block is movably connected in the push block cavity. At least two OK clamps are detachably connected in the locking cavity. The push block thereof is respectively in contact with the OK clamp and the piece to be welded.

Preferably, the OK clamp is composed of a lifting press block, a screw hole provided at the central part of the lifting press block, and a pressing screw which passes through the screw hole and is in threaded connection with the groove bottom of the positioning groove on the base. The side surface of the lifting press block in contact with the push block is a wedge-shaped inclined surface, and the working principle thereof is that when the lifting press block is pressed by the pressing screw, the lifting press block moves vertically downwards, and the push block is pressed towards the mobile phone middle frame by the side thrust of the wedge-shaped inclined surface thereof, so as to realize the lateral positioning of the mobile phone middle frame.

As the second preferred solution of the welding positioning tool of the present invention, the welding positioning tool further includes a plurality of automatic advancing and retracting pressing devices arranged on the periphery of the upper plane of the base for pressing and fixing the outer edge portion of the frame, and a vacuum suction device for fixing the aluminum plate in a vacuum suction manner is further arranged on the middle part of the base located at the bottom of the positioning groove. During the assembly welding, the friction stir welding is carried out by using an XYZ three-dimensional numerical control friction stir welding machine. Preferably, the vacuum suction device includes a concave counterbore arranged on a groove bottom plane of the middle part of the positioning groove, an annular sealing groove arranged on the groove bottom plane of the positioning groove and located between the first annular groove and the concave counterbore, an annular seal ring mounted in the annular sealing groove, and a vacuum suction hole opened on the base and in communication with the concave counterbore. The vacuum suction hole is connected to a vacuuming device via a vacuum suction pipeline. The vacuuming device is connected to a control system.

Preferably, the automatic advancing and retracting pressing device includes a pressing plate movably arranged above the base, a guide post vertically arranged upwards on an upper end surface of the base, an oil cylinder mounting hole penetrating through the base in an upward and downward direction, and an oil cylinder fixed on a lower end of the base. A hole expanding is arranged on an upper part of the oil cylinder mounting hole. A compression spring is arranged in the hole expanding. The pressing plate is respectively provided with a kidney slot and an obliquely arranged guide hole. A front end of a piston rod of the oil cylinder successively passes upwards through the oil cylinder mounting hole, an inner hole of the compression spring, and the kidney slot, and is connected with a press head for pressing the pressing plate. The guide post is arranged obliquely towards the outer side of the base. A guide hole on the pressing plate is sheathed on the guide post and is connected to the guide post in a sliding fit.

The above-described oil cylinder may be replaced with an air cylinder. For ease of control, a solenoid valve for controlling the oil cylinder or air cylinder, respectively, is connected to a control system.

When the piston rod of the oil cylinder moves upwards to drive the press head at the front end thereof to lift upwards, the pressing plate rises upwards and outwards along the obliquely arranged guide post under the action of the compression spring, and the workpiece (the splicing assembly of the mobile phone middle frame) can be loaded and unloaded without interfering with the pressing plate.

As a further improvement of the welding positioning tool of the present invention, a first annular groove is provided in the groove bottom plane of the positioning groove of the base and directly opposite to the welding seam, and a friction stir welding temperature equalization compensator for heating the back of the welding seam to equalize the temperature of the upper and lower positions of the welding seam part is provided in the first annular groove.

Preferably, the friction stir welding temperature equalization compensator includes an annular magnetizer mounted in the first annular groove and adapted to the first annular groove, a second annular groove opened on the annular magnetizer and opened upwards, and an annular copper pipe arranged in the second annular groove, wherein the annular copper pipe is provided with a slit for breaking the annular copper pipe, and a plug piece is arranged at a mouth of the slit of the annular copper pipe; a pair of electrode copper pipes are led out downwards at two side parts of the annular copper pipes near the slit; the inside of the electrode copper pipes is in communication with the inside of the annular copper pipes; the pair of electrode copper pipes pass downwards through the base and are externally connected with a power frequency power supply; and cooling circulating water is provided inside the electrode copper pipes.

After the workpiece (the splicing assembly of the mobile phone middle frame) is positioned and clamped into the welding positioning tool, the control system turns on the power frequency power supply of the friction stir welding temperature equalization compensator to realize the directional magnetic induction heating of the upper workpiece, which cooperates with the friction stir welding to improve the temperature uniformity of the upper and lower positions of the welding seam between the frame and the aluminum plate and the stability of the welding temperature, thereby overcoming the possible disadvantages of the upper and lower temperature non-uniformity of the friction stir welding alone, which is beneficial to further improve the stability of the welding quality.

Preferably, the electrode copper pipe is an electrode copper pipe having a rectangular cross-sectional profile, and an upper end surface of the rectangular cross-sectional profile electrode copper pipe is lower than an upper end surface of the annular magnetizer.

In the present invention, a manipulator for automatically mounting and positioning the splicing assembly of the mobile phone middle frame into the welding positioning tool before welding and removing the assembled welding body of the mobile phone middle frame from the welding positioning tool after welding is also provided in combination.

It should be noted that the material-retained forging deformation dressing method and the method of deformation of inner side plate under pressure to create grooves of the present invention are not only applicable to the processing technology of a mobile phone middle frame manufactured by friction stir welding, but also applicable to the processing technology of a mobile phone middle frame manufactured by welding by other welding methods. In addition, the technical concept of setting the speed of the titanium aluminum composite strip to be slowed down and setting the welding trajectory to be offset, which is used in friction stir welding, can also be applied to the processing technology of the mobile phone middle frame manufactured by welding using other welding methods.

In addition, the titanium aluminum composite strip may be replaced with another type of double-layer composite strip, for example, a double-layer composite strip in which an outer layer of a non-aluminum material layer and an inner layer of an aluminum material layer are combined. Further, the double-layer composite strip may use a bimetallic composite strip in which the inner layer is an aluminum layer and the outer layer is another metal (a non-aluminum metal, including a composite metal); alternatively, a double-layer composite strip may be used in which the inner layer is aluminum and the outer layer is a layer of a high temperature resistant nonmetallic material.

The following are two basic technical solutions for manufacturing a mobile phone middle frame using a double-layer composite strip:
a process for manufacturing a double-layer composite for a mobile phone middle frame, including using a double-layer composite strip formed by connecting two layers of composites of non-aluminum material and aluminum material as a frame of the mobile phone middle frame, and using an aluminum plate as an inner side plate connected in the frame of the mobile phone middle frame; wherein the non-aluminum material layer in the double-layer composite strip is located outside the frame of the mobile phone middle frame, and the aluminum layer in the double-layer composite strip is located inside the frame of the mobile phone middle frame; and the frame of the mobile phone middle frame is a combined frame formed by splicing a plurality of double-layer composite strips; the plurality of double-layer composite strips include at least one bending-type double-layer composite strip of U-shaped bending-type double-layer composite strips and L-shaped bending-type double-layer composite strips; wherein after the bending-type double-layer composite strip is bent, a bending portion is subjected to dressing using a material-retained forging deformation dressing method, wherein the material-retained forging deformation dressing method is performed by forging deformation such that the thickened portion of the bending portion thickness caused by bending is removed by forging deformation while a constricted portion of an outer rounded surface of the bending portion caused by bending is compensated; and
preferably, the double-layer composite strip is a titanium aluminum composite strip; and
a process for manufacturing a double-layer composite for a mobile phone middle frame, includes using a double-layer composite strip formed by connecting two layers of composites of non-aluminum material and aluminum material as a frame of the mobile phone middle frame, and using an aluminum plate as an inner side plate connected in the frame of the mobile phone middle frame; wherein the non-aluminum material layer in the double-layer composite strip is located outside the frame of the mobile phone middle frame, and the aluminum layer in the double-layer composite strip is located inside the frame of the mobile phone middle frame; and the frame of the mobile phone middle frame is connected to the inner side plate of the mobile phone middle frame by welding; wherein after the inner side plate of the mobile phone middle frame is welded, the inner side plate of the mobile phone middle frame is subjected to a stress relieving treatment by an inner panel deforming under pressure to create grooves method, wherein the inner panel deforming under pressure to create grooves method includes: applying pressure on the front and back surfaces of the inner side plate of the double-layer composite for the mobile phone middle frame by using a molding head with a plurality of strip-shaped protrusions, and deforming the front and back surfaces of the inner side plate under pressure to create a plurality of recessed grooves; and
preferably, the double-layer composite strip is a titanium aluminum composite strip.

### Advantageous effect of the present invention

Firstly, according to the process for manufacturing the titanium aluminum composite for the mobile phone middle frame of the present invention, wherein a titanium aluminum composite strip is used as a frame of the mobile phone middle frame, and an aluminum plate is used as an inner side plate of the mobile phone middle frame, and friction stir welding (also referred to as friction stir welding) is used to weld the mobile phone middle frame after assembly; on the one hand, the titanium aluminum composite ensures the strength requirements of the mobile phone middle frame, and on the other hand, titanium as an exposed part of the mobile phone middle frame has a better appearance, scratch resistance and fall resistance. Further, the machining part of the mobile phone middle frame is mainly aluminum, so its machining is convenient and efficient. In addition, by using friction stir welding, high-speed rotating stirring of the stirring pin inserted into the welding seam on the friction stir welding equipment and friction between the upper shaft shoulder of the stirring pin and the upper end of the welding seam are used to generate heat, so that the frame aluminum material and the aluminum plate are softened and welded together, which has advantages of high thermal efficiency, low welding temperature, less welding deformation, and high welding strength. The overall performance of a mobile phone middle frame thereby is improved.

Secondly, according to the process for manufacturing the titanium aluminum composite for the mobile phone middle frame of the present invention, after the titanium aluminum composite strip is bent, the bending portion of the titanium aluminum composite strip is dressed by using a material-retained forging deformation dressing method which is realized in a manner that the metal material is not removed, and on the one hand, the thickened portion of the bending portion thickness caused by bending is removed by the local directional deformation of the material at the bending portion, and on the other hand, the constricted portion of an outer rounded surface of the bending portion caused by bending is compensated, thereby improving the manufacturing quality of the bending-type titanium aluminum composite strip.

Thirdly, according to the process for manufacturing the titanium aluminum composite for the mobile phone middle frame of the present invention, in the process of friction stir welding, when the stirring pin inserted into the welding seam on the friction stir welding equipment moves to a region where the titanium aluminum composite strips are spliced, the moving speed of the stirring pin is set to be slowed down, and at the same time, the stirring pin is set to be offset in the region where the titanium aluminum composite strips are spliced towards the outer side of the frame, so that the defect that heat loss at the splicing point of the titanium aluminum composite strips is relatively fast compared to other regions can be overcome, forming effective compensation for heat, so that possible welding cracks at the splicing point of the titanium aluminum composite strips can be reduced and eliminated as far as possible, improving the welding reliability of friction stir welding.

Fourthly, according to the process for manufacturing the titanium aluminum composite for the mobile phone middle frame of the present invention, wherein the stress relief treatment after welding of the mobile phone middle frame is achieved by an inner panel deforming under pressure to create grooves method. The stress relief treatment method can generate a compressive stress in the inner side plate which counteracts a tensile stress of the welding shrinkage parameter, so that the welding tensile stress which is difficult to be eliminated by a conventional solid solution and aging treatment can be effectively removed, thereby improving the quality of the stress relief treatment, so that the deformation generated in the second CNC machining can be greatly reduced, and thus a high-quality mobile phone middle frame can be obtained.

Fifthly, according to the process for manufacturing the titanium aluminum composite for the mobile phone middle frame of the present invention, in the welding positioning tool of the OK clamp, the push block is used in cooperation with the OK clamp to fix the piece to be welded in the mobile phone middle frame. The advantage of this method is that when the OK clamp fixes the piece to be welded via the push block, when the piece to be welded appears internal shrinkage due to high temperature during the welding process, the internal squeezing force of the OK clamp is released to ensure that the piece to be welded does not appear shaking, so as to further improve the welding quality of friction stir welding.

Sixthly, according to the process for manufacturing the titanium aluminum composite for the mobile phone middle frame of the present invention, a welding positioning tool of an automatic advancing and retracting pressing device is used. The automatic advancing and retracting pressing device can automatically clamp the workpiece (the splicing assembly of the mobile phone middle frame), and when unloading the workpiece, the workpiece can be automatically released for taking out the workpiece, thereby greatly facilitating the efficient installation of the workpiece into the welding positioning tool by a manipulator and achieving rapid taking out of the workpiece, thereby further improving the efficiency of production.

Seventhly, according to the process for manufacturing the titanium aluminum composite for the mobile phone middle frame of the present invention, a friction stir welding temperature equalization compensator is further provided on a further improved welding positioning tool, so that the welding quality of the friction stir welding can be further improved.

### BRIEF DESCRIPTION OF THE DRAWINGS

FIG. 1 is a schematic flow chart of a process for manufacturing a titanium aluminum composite for a mobile phone middle frame according to the present invention;
FIG. 2 is a schematic flow chart of the process for manufacturing the titanium aluminum composite for the mobile phone middle frame further improved on the basis of FIG. 1;
FIG. 3 is one of the structural schematic diagrams of a mobile phone middle frame (wherein the frame is composed of three titanium aluminum composite strips);
FIG. 4 is one of the structural schematic diagrams of a mobile phone middle frame (wherein the frame is composed of four titanium aluminum composite strips);
FIG. 5 is a structural schematic diagram of a titanium aluminum composite strip;
FIG. 6 is a structural schematic diagram of an improvement of the welding positioning tool;
FIG. 7 is a cross-sectional view taken along the A direction of FIG. 6;
FIG. 8 is a structural schematic diagram of another improvement of the welding positioning tool;
FIG. 9 is an enlarged partial view of FIG. 8.
FIG. 10 is a structural schematic diagram (top view) of a base in FIG. 9;
FIG. 11 is a structural schematic diagram (bottom view) of an annular copper pipe of FIG. 9;
FIG. 12 is a structural schematic diagram of grooves created on an inner side plate (aluminum plate) by a method of deformation of inner side plate to create grooves;
FIG. 13 shows data comparing the yield before and after improvement by taking the improved process integration (improvement) measures (in the table, CNC2 represents the test after the second CNC machining, CNC3 represents the test after the third CNC machining after the product is sent to the customer, and Treatment T represents the test after the surface treatment after the third CNC machining).

In the figures: 1, titanium aluminum composite strip, 2, frame, 3, aluminum plate (inner side plate), 4, titanium layer, 5, aluminum layer, 6, straight strip-type titanium aluminum composite strip, 7, bending-type titanium aluminum composite strip, 8, splicing joint, 9, welding positioning tool, 10, base, 11, positioning groove, 12, automatic advancing and retracting pressing device, 13, vacuum suction device, 14, first annular groove, 15, friction stir welding temperature equalization compensator, 16, annular magnetizer, 17, second annular groove, 18, annular copper pipe, 19, slit, 20, plug piece, 21, electrode copper pipe, 22, concave counterbore, 23, annular sealing groove, 24, annular seal ring, 25, vacuum suction hole, 26, vacuum suction pipeline, 27, supporting foot, 28, pressing plate, 29, guide post, 30, oil cylinder mounting hole, 31, oil cylinder, 32, compression spring, 33, kidney slot, 34, press head, 35, push block, 36, OK clamp, 37, welding cavity, 38, push block cavity, 39, locking cavity, 40, mounting hole, 41, lifting press block, 42, pressing screw, 43, groove, 44, welding positioning tool.

### DETAILED DESCRIPTION OF THE INVENTION

Below, specific embodiments of the present invention will be further described in conjunction with the accompanying drawings and examples. The following examples are provided only to more clearly illustrate the technical solution of the present invention, and are not intended to limit the scope of application of the present invention.

### Example 1

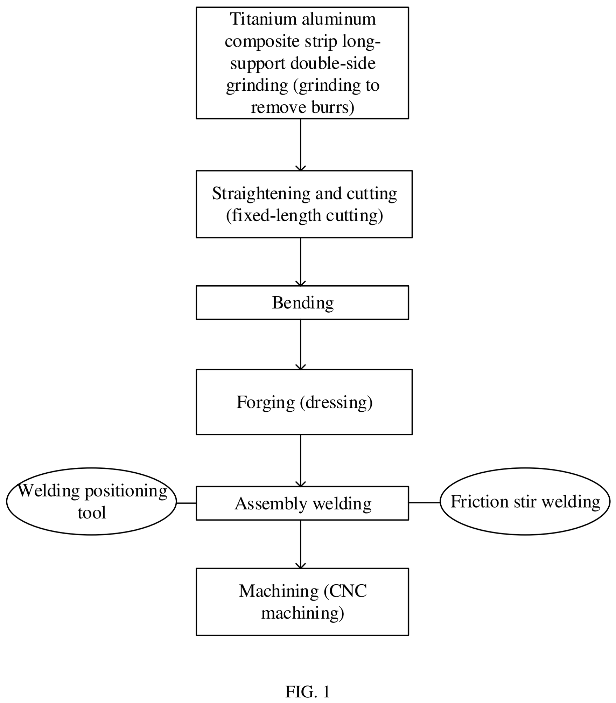

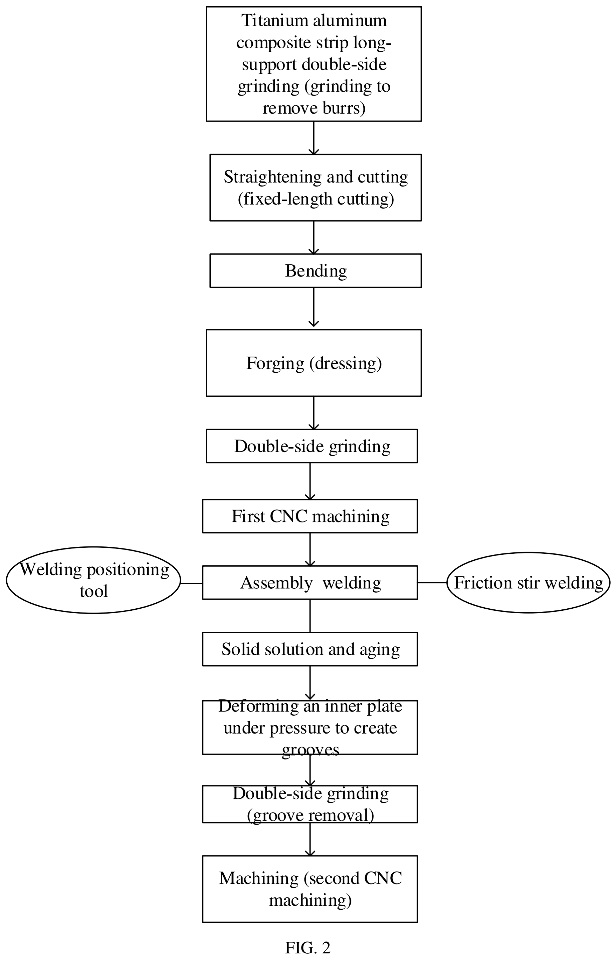

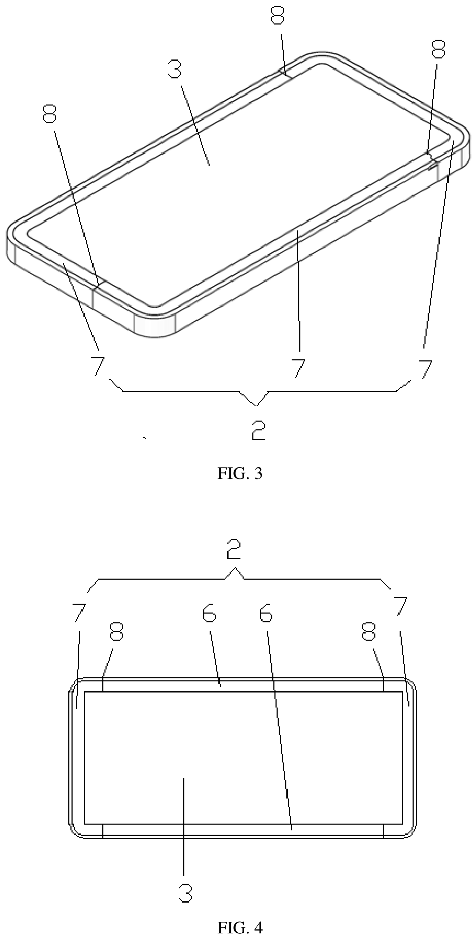

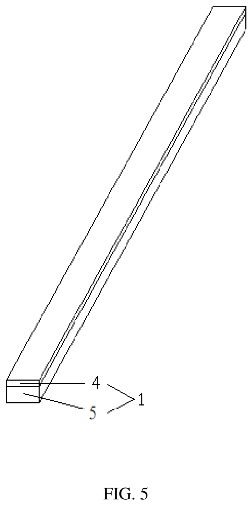

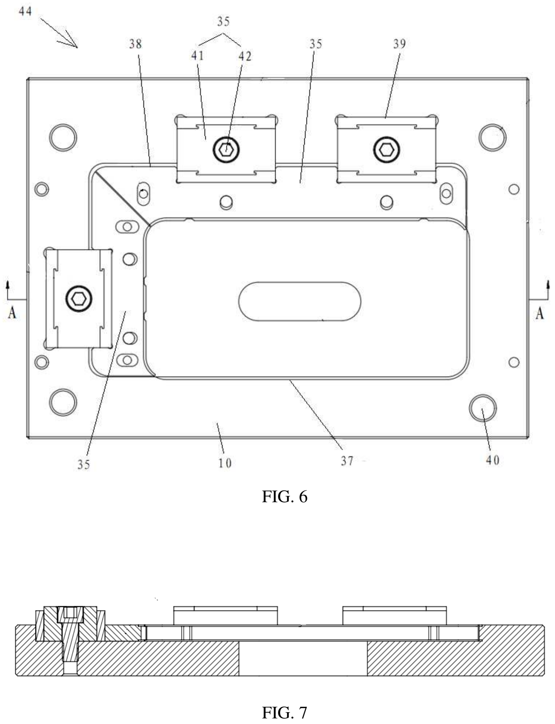

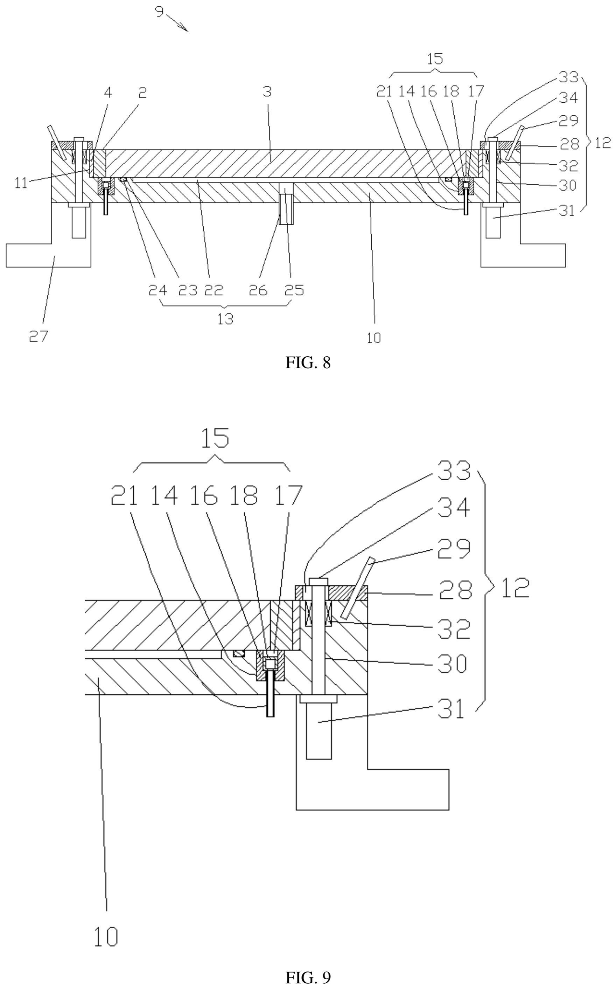

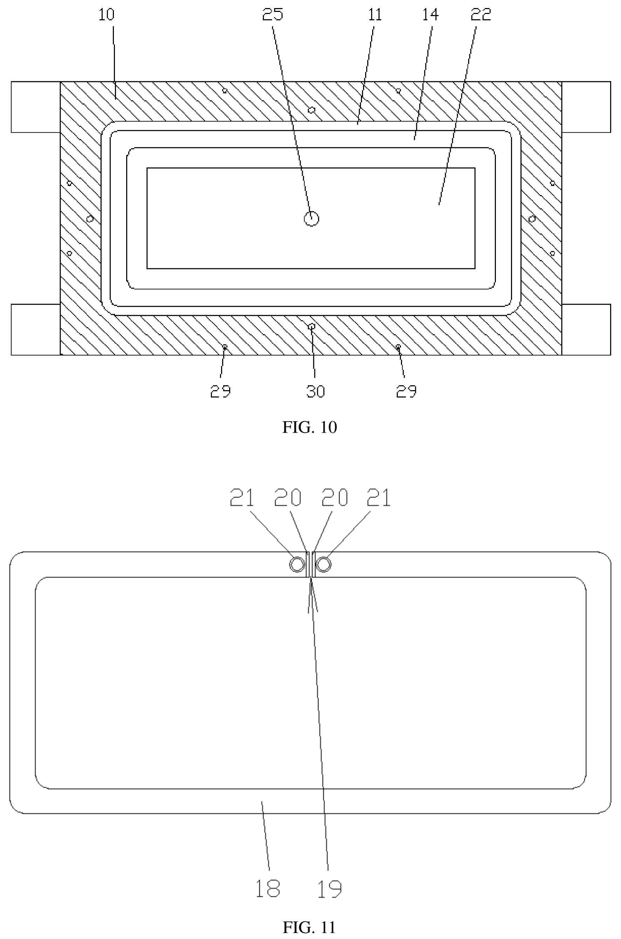

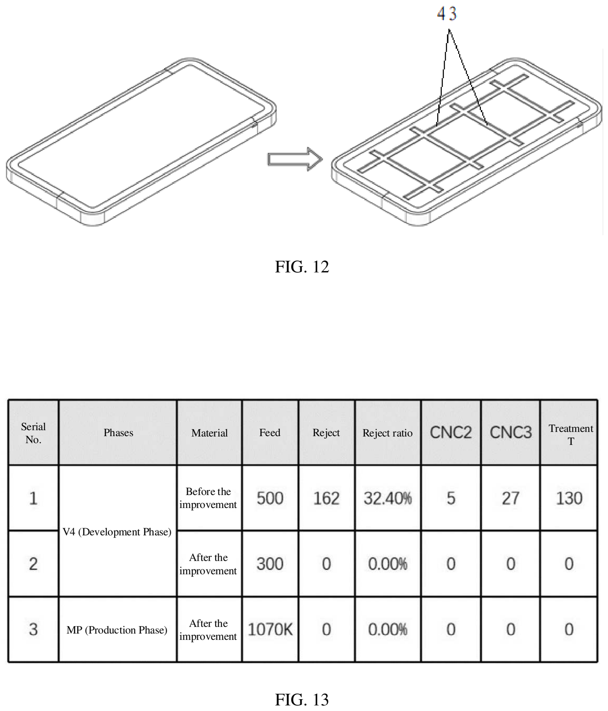

As shown in FIGs. 1 to 13, an example of a process for manufacturing a titanium aluminum composite for a mobile phone middle frame, includes using a titanium aluminum composite strip 1 formed by connecting two layers of composites of titanium and aluminum as a frame 2 of a mobile phone middle frame, and using an aluminum plate 3 as an inner side plate connected in the frame 2 of the mobile phone middle frame. The titanium layer 4 in the titanium aluminum composite strip 1 is located outside the frame 2 of the mobile phone middle frame, and the aluminum layer 5 in the titanium aluminum composite strip 1 is located inside the frame 2 of the mobile phone middle frame; and the frame 2 of the mobile phone middle frame is connected to the inner side plate of the mobile phone middle frame by friction stir welding.

Preferably, the titanium aluminum composite strip 1 is a titanium aluminum composite strip 1 formed by roll-bonding a titanium strip as a titanium layer 4 and an aluminum strip as an aluminum layer 5.

In the present example, the frame 2 of the mobile phone middle frame is a combined frame formed by splicing a plurality of titanium aluminum composite strips 1; the plurality of titanium aluminum composite strips 1 include at least one bending-type titanium aluminum composite strip 7 of U-shaped bending-type titanium aluminum composite strips and L-shaped bending-type titanium aluminum composite strips.

As one of the preferred solutions of the frame of the mobile phone middle frame, the frame 2 of the mobile phone middle frame is a combined frame formed by splicing four titanium aluminum composite strips 1. Two of the four titanium aluminum composite strips 1 are straight strip-type titanium aluminum composite strips 6, the other two of the four titanium aluminum composite strips 1 are bending-type titanium aluminum composite strips 7 formed by bending the titanium aluminum composite strips. The two straight strip-type titanium aluminum composite strips 6 are arranged in parallel and spaced apart, and two ends of the two bending-type titanium aluminum composite strips 7 are respectively connected to two ends of the two straight strip-type titanium aluminum composite strips 6 so as to form the frame 2 of the mobile phone middle frame.

Wherein two bending-type titanium aluminum composite strips 7 of the four titanium aluminum composite strips 1 are U-shaped bending strips.

As the second preferred solution of the frame of the mobile phone middle frame, the frame 2 of the mobile phone middle frame is a combined frame formed by splicing three titanium aluminum composite strips 1. The three titanium aluminum composite strips 1 are all bending-type titanium aluminum composite strips 7 formed by bending the titanium aluminum composite strips 1. In the three titanium aluminum composite strips 1, two are L-shaped bending strips, and the other one is U-shaped bending strip. The two short sides of the two L-shaped bending strips are connected, and the long sides are respectively connected to two ends of the U-shaped bending strips so as to form the frame 2 of the mobile phone middle frame.

In the present example, the thickness of the frame 2 of the mobile phone middle frame is set to be equal to the thickness of the aluminum plate 3, and then the desired final product shape of the mobile phone middle frame is obtained by further manufacturing (including machining the inner side plate).

In this embodiment, the manufacturing of the titanium aluminum composite for the mobile phone middle frame at least includes the following procedures in sequence: fixed-length cutting, bending, dressing, assembly welding, and machining; wherein the welding is friction stir welding, and the dressing including dressing front and rear surfaces of a bending portion of the bending-type titanium aluminum composite strip 7, and removing a thickened portion of a bending portion thickness caused by bending.

Preferably, prior to the fixed-length cutting, the long titanium aluminum composite strip long-support is subjected to double-side grinding using a double-side grinding equipment to remove burrs by a grinding process.

Preferably, the fixed-length cutting is carried out by taking the titanium aluminum composite strip long-support as a blank, straightening the strip, and then cutting the strip with a set length. During welding, a welding positioning tool 9 or 44 is used; wherein the plurality of titanium aluminum composite strips 1 and aluminum plate 3 are placed in the welding positioning tool 9 or 44 for positioning and fixing, and then, the friction stir welding is performed.

Preferably, the burr removing procedure may be added after the bending and before the dressing.

Preferably, the burr removing procedure is achieved by using a double-side grinding equipment. Preferably, the dressing is a material-retained forging deformation dressing method implemented without removing a metal material, wherein the material-retained forging deformation dressing method is performed by forging deformation such that the thickened portion of the bending portion thickness caused by bending is removed by forging deformation while a constricted portion of an outer rounded surface of the bending portion caused by bending is compensated.

Wherein the specific steps of the material-retained forging deformation dressing method are as follows: an inner side surface of the bending-type titanium aluminum composite strip 7 located at the bending portion is used as a positioning benchmark; the inner side surface of the bending-type titanium aluminum composite strip 7 located at the bending portion is positioned against a positioning die adapted to the inner side surface of the bending portion; then, the front and rear surfaces of the bending portion of the bending-type titanium aluminum composite strip 7 are flattened by forging, so that the thickened portion of the bending portion thickness caused by bending is removed by forging deformation while the constricted portion of the outer rounded surface of the bending portion caused by bending is compensated.

Preferably, the positioning die is provided with a positioning groove adapted to the bending portions of the bending-type titanium aluminum composite strips 7, and the material-retained forging deformation dressing method is performed by, after the bending portion of the bending-type titanium aluminum composite strip 7 is positioned in the positioning groove of the positioning die, forging and flattening the front and rear surfaces of the bending portion of the bending-type titanium aluminum composite strip 7.

In the friction stir welding process, as one of the improved schemes of the process for manufacturing a titanium aluminum composite for a mobile phone middle frame of the present example, during the friction stir welding process, when the stirring pin inserted into a welding seam on the friction stir welding equipment moves to the region where the titanium aluminum composite strips are spliced, the stirring pin is set to move at a slower speed.

Preferably, the moving speed when a stirring pin moves to a region where the titanium aluminum composite strips are spliced is decreased by more than 40%.

Preferably, the moving speed when a stirring pin moves to a region where the titanium aluminum composite strips are spliced is decreased to 80-150 mm/min.

As the second improved scheme of the process for manufacturing a titanium aluminum composite for a mobile phone middle frame of the present example, during the friction stir welding process, when the stirring pin inserted into a welding seam on the friction stir welding equipment moves to the region where the titanium aluminum composite strips are spliced, a movement trajectory of the stirring pin in the splicing region is provided with an offset amount in a direction perpendicular to the movement trajectory with respect to a movement trajectory of the stirring pin in other regions, and the offset amount is offset in a direction more toward a side of the region where the titanium aluminum composite strips are spliced.

Preferably, the offset is 0.2-1.0 mm.

More preferably, the offset is 0.5 mm.

The friction stir welding uses the following comprehensive process measures.

The moving speed F value of local welding parameters when a stirring pin moves to the region where the titanium aluminum composite strips are spliced decreases to 80-150 mm/min; the local welding trajectory is close to an outer side frame where the cracks easily occur by about 0.5-1.2 mm, while avoiding the contact between the stirring pin and titanium; a main shaft of the friction stir welding equipment rotates counterclockwise, and a welding trajectory is fed counterclockwise; the product is preheated to 100-200°C; the forging pressure is increased in the welding process, and the pressure is controlled at 0.5-1.5 tons.

More preferred integrated process measures are as follows.

The F value of local welding parameters is reduced to 90-140 mm/min; the local welding trajectory is close to an outer side frame where the cracks easily occur by about 0.5-1.0 mm, while avoiding the contact between the stirring pin and titanium; a main shaft of the friction stir welding equipment rotates counterclockwise, and a welding trajectory is fed counterclockwise; the product is preheated to 120-180°C; the forging pressure is increased in the welding process, and the pressure is controlled at 0.7-1.3 tons.

Further preferred integrated process measures are as follows.

The F value of local welding parameters is reduced to 100-130 mm/min; the local welding trajectory is close to an outer side frame where the cracks easily occur by about 0.5-0.8 mm, while avoiding the contact between the stirring pin and titanium; a main shaft of the friction stir welding equipment rotates counterclockwise, and a welding trajectory is fed counterclockwise; the product is preheated to 140-160°C; the forging pressure is increased in the welding process, and the pressure is controlled at 0.9-1.1 tons.

As the third improved scheme of the process for manufacturing a titanium aluminum composite for a mobile phone middle frame of the present invention in the present example, a double-side grinding procedure and a first CNC machining procedure are provided in sequence after the dressing and before the assembling; the machining after welding includes a second CNC machining; a stress relieving treatment procedure and a double-side grinding procedure are successively provided after welding and before the second CNC machining; the double-side grinding is performed using a double-side grinding equipment; and the stress relieving treatment procedure includes performing a stress relieving treatment by means of a solid solution and aging heat treatment.

By adding a solid solution treatment (480-540°C) after the welding, the aluminum alloy is heated to a high-temperature single-phase region and maintained at a constant temperature, so that the excess phase is sufficiently dissolved into the solid solution, and then rapidly cooled, to obtain a supersaturated solid solution. After aging treatment (180°C), the supersaturated solid solution is decomposed and a fine and dispersed strengthening phase precipitated, so as to release the stress and improve the strength and hardness.

Considering that friction welding is locally heated along the welding trajectory, some areas will experience temperature rise and volume expansion, while the surrounding unheated or slower temperature rising areas will limit their expansion, resulting in interactive forces inside the metal, namely thermal stress. From the microscopic point of view, the increase of temperature increases the thermal movement of the metal atoms and the distance between the atoms, while the atoms in the unheated part keep the original state, which results in the change of the relative position between the atoms and the generation of thermal stress. The thermal stress will cause severe deformation of the post-process CNC machining flatness. To this end, the following improvements have been taken:
As the fourth improved scheme of the process for manufacturing a titanium aluminum composite for a mobile phone middle frame of the present example, the stress relieving treatment process includes a stress relieving treatment achieved by an inner panel deforming under pressure to create grooves method, wherein the inner panel deforming under pressure to create grooves method includes: applying pressure on the front and back surfaces of the inner side plate (aluminum plate 3) of the titanium aluminum composite for the mobile phone middle frame by using a molding head with a plurality of strip-shaped protrusions, and deforming the front and back surfaces of the inner side plate under pressure to create a plurality of recessed grooves 43.

Preferably, the plurality of recessed grooves 43 form a combination of vertical and horizontal grooves.

More preferably, the grooves 43 have a depth of 0.1-0.5 mm.

The working principle of the above-mentioned inner panel deforming under pressure to create grooves method so as to realize the stress relieving treatment is: after the mobile phone middle frame is welded, a tensile stress is formed in the inner side plate (aluminum plate 3) under the pulling action of the contraction of the welding seam. By deforming the inner side plate under pressure and creating grooves 43 on the inner side plate, a compressive stress can be generated which counteracts the internal tensile stress of the inner side plate, thereby achieving the stress relieving treatment.

Preferably, the combination of the steps of solid solution and aging heat treatment after friction stir welding and deforming under pressure to create grooves is as follows: friction welding→ T4 (solid solution)→ deforming under pressure to create grooves → T6 (aging) →double-side grinding processing to remove the grooves.

During welding, the friction stir welding is performed by welding from a friction stir welding starting position at a splicing joint adjacent to the titanium aluminum composite strip, welding a ring along the periphery of the joint between the frame 2 of the mobile phone middle frame and the inner side plate (aluminum plate 3) of the mobile phone middle frame, and then withdrawing the welding from the splicing joint or withdrawing from the aluminum plate 3 as a removal area of the subsequent CNC machining.

In the present example, the welding positioning tool 9 includes a base 10 and a positioning groove 11 provided on the upper plane of the base 10; and the splicing assembly of the mobile phone middle frame is integrally positioned in the positioning groove 11 of the base 10.

Further improvements of the friction stir welding process of the present example include the following measures.
(1) a main shaft of the friction stir welding equipment rotates counterclockwise, and the stirring pin is fed counterclockwise along the welding trajectory;
(2) before friction stir welding, the product is preheated to 100-200°C;
(3) the forging pressure in the welding process is increased, and pressure control (0.9-1.1 tons) is performed.

As one of the preferred solutions of the welding positioning tool of the present example, the welding positioning tool 44 further includes a push block 35 and at least two OK clamps 36 arranged on the base 10, and the at least two OK clamps 36 are respectively arranged at two adjacent side positions of the positioning groove 11. The positioning groove 11 formed by a welding cavity 37, a push block cavity 38, and a plurality of locking cavities 39 is arranged in the base 10. Mounting holes 40 are arranged at four corners of the base 10. A piece to be welded of the mobile phone middle frame is arranged in the positioning groove 11. The push block 35 is movably connected in the push block cavity 38. At least two OK clamps 36 are detachably connected in the locking cavity 39. The push block 35 thereof is respectively in contact with the OK clamp 36 and the piece to be welded.

Preferably, the OK clamp 36 is composed of a lifting press block 41, a screw hole provided at the central part of the lifting press block 41, and a pressing screw 42 which passes through the screw hole and is in threaded connection with the groove bottom of the positioning groove 11 on the base 10. The side surface of the lifting press block 41 in contact with the push block 35 is a wedge-shaped inclined surface, and the working principle thereof is that when the lifting press block 41 is pressed by the pressing screw 42, the lifting press block 41 moves vertically downwards, and the push block 35 is pressed towards the mobile phone middle frame by the side thrust of the wedge-shaped inclined surface thereof, so as to realize the lateral positioning of the mobile phone middle frame.

As the second preferred solution of the welding positioning tool of the present example, the welding positioning tool further includes a plurality of automatic advancing and retracting pressing devices 12 arranged on the periphery of the upper plane of the base 10 for pressing and fixing the outer edge portion of the frame 2, and a vacuum suction device 13 for fixing the aluminum plate 3 in a vacuum suction manner is further arranged on the middle part of the base 10 located at the bottom of the positioning groove 11. During the assembly welding, the friction stir welding is carried out by using an XYZ three-dimensional numerical control friction stir welding machine.

Preferably, the vacuum suction device 13 includes a concave counterbore 22 arranged on a groove bottom plane of the middle part of the positioning groove 11, an annular sealing groove 23 arranged on the groove bottom plane of the positioning groove 11 and located between the first annular groove 14 and the concave counterbore 22, an annular seal ring 24 mounted in the annular sealing groove 23, and a vacuum suction hole 25 opened on the base 10 and in communication with the concave counterbore 22. The vacuum suction hole 25 is connected to the vacuuming device via a vacuum suction pipeline 26. The vacuuming device is connected to a control system.

Preferably, the automatic advancing and retracting pressing device 12 includes a pressing plate 28 movably arranged above the base 10, a guide post 29 vertically arranged upwards on an upper end surface of the base 10, an oil cylinder mounting hole 30 penetrating through the base 10 in an upward and downward direction, and an oil cylinder 31 fixed on a lower end of the base 10. A hole expanding is arranged on an upper part of the oil cylinder mounting hole 30. A compression spring 32 is arranged in the hole expanding. The pressing plate 28 is respectively provided with a kidney slot 33 and an obliquely arranged guide hole. A front end of a piston rod of the oil cylinder 31 successively passes upwards through the oil cylinder mounting hole 30, an inner hole of the compression spring 32, and the kidney slot 33 and connected with a press head 34 for pressing the pressing plate 28. The guide post 29 is arranged obliquely towards the outer side of the base 10. A guide hole on the pressing plate 28 is sheathed on the guide post 29 and is connected to the guide post 29 in a sliding fit.

The above-described oil cylinder 31 may be replaced with an air cylinder. For ease of control, a solenoid valve for controlling the oil cylinder or air cylinder, respectively, is connected to a control system.

When the piston rod of the oil cylinder 31 moves upwards to drive the press head at the front end thereof to lift upwards, the pressing plate 28 rises upwards and outwards along the obliquely arranged guide post 29 under the action of the compression spring 32, and the workpiece (the splicing assembly of the mobile phone middle frame) can be loaded and unloaded without interfering with the pressing plate 28.

As a further improvement of the present example, a first annular groove 14 is provided in the groove bottom plane of the positioning groove 11 of the base 10 and directly opposite to the welding seam, and a friction stir welding temperature equalization compensator 15 for heating the back of the welding seam to equalize the temperature of the upper and lower positions of the welding seam part is provided in the first annular groove 14.

Preferably, the friction stir welding temperature equalization compensator 15 includes an annular magnetizer 16 mounted in the first annular groove 14 and adapted to the first annular groove 14, a second annular groove 17 opened on the annular magnetizer 16 and opened upwards, and an annular copper pipe 18 arranged in the second annular groove 17. The annular copper pipe 18 is provided with a slit 19 for breaking the annular copper pipe 18, and a plug piece 20 is arranged at a mouth of the slit 19 of the annular copper pipe 18. A pair of electrode copper pipes 21 are led out downwards at two side parts of the annular copper pipes 18 near the slit 19. The inside of the electrode copper pipes 21 is in communication with the inside of the annular copper pipes 18. The pair of electrode copper pipes 21 pass downwards through the base 10 and are externally connected with a power frequency power supply. Cooling circulating water is provided inside the electrode copper pipes 21.

After the workpiece (the splicing assembly of the mobile phone middle frame) is positioned and clamped into the welding positioning tool 9, the control system turns on the power frequency power supply of the friction stir welding temperature equalization compensator 15 to realize the directional magnetic induction heating of the workpiece above, which cooperates with the friction stir welding to improve the temperature uniformity of the upper and lower positions of the welding seam between the frame 2 and the aluminum plate 3 and the stability of the welding temperature, thereby overcoming the possible disadvantages of the upper and lower temperature non-uniformity of the friction stir welding alone, which is beneficial to further improve the stability of the welding quality.

Preferably, the electrode copper pipe 21 is an electrode copper pipe having a rectangular cross-sectional profile, and an upper end surface of the rectangular cross-sectional profile electrode copper pipe 21 is lower than an upper end surface of the annular magnetizer 16.

In the present example, a manipulator for automatically mounting and positioning the splicing assembly of the mobile phone middle frame into the welding positioning tool 9 before welding and removing the assembled welding body of the mobile phone middle frame from the welding positioning tool 9 after welding is also provided in combination.

### Example 2

This example is a preferred embodiment of a process for manufacturing titanium aluminum composite for mobile phone middle frame based on Example 1.

A process for manufacturing titanium aluminum composite for mobile phone middle frame, includes the following steps:
(1) grinding to remove burrs: burrs located on the two outer sides of the junction of the two layers of titanium and aluminum are removed through grinding;
(2) fixed-length cutting: the titanium aluminum composite strip 1 is cut according to a set length to prepare four titanium aluminum composite strips respectively; two titanium aluminum composite strips therein are bent so as to obtain two straight strip-type titanium aluminum composite strips 6 and two bending-type titanium aluminum composite strips 7;
(3) dressing: the front and rear surfaces of the bending-type titanium aluminum composite strip 7 located at the bending portion are dressed to remove a thickened portion of a bending portion thickness caused by bending;
(4) assembly welding: the four titanium aluminum composite strips 1 and the aluminum plate 3 are assembled and combined so that the four titanium aluminum composite strips 1 are spliced on the outer periphery of the aluminum plate 3 to form a frame 2 at the outer periphery of the aluminum plate 3 to form a splicing assembly of the mobile phone middle frame. Then, the titanium aluminum composite strips 1 and the aluminum plate 3 which are connected to each other in the splicing assembly are welded and fixed together using friction stir welding to obtain an assembly welded body of the mobile phone middle frame; and
(5) machining: the upper and lower surfaces of the assembled welded body are polished and smoothed, and CNC machining is performed to prepare the finished mobile phone middle frame.

Preferably, in the dressing of step (3), the machining equipment used is a double-side grinder or a CNC machine tool.

Preferably, in the assembly welding of step (4), the friction stir welding is performed by welding from a friction stir welding starting position from a splicing joint 8 of the straight strip-type titanium aluminum composite strip 6 and the bending-type titanium aluminum composite strip 7, welding a ring along the periphery of the joint between the frame of the mobile phone middle frame and the inner side plate of the mobile phone middle frame, and then withdrawing the welding from the splicing joint 8 or withdrawing from the aluminum plate 3 as a removal area of the subsequent CNC machining.

In the present example, in the assembly welding of step (4), a welding positioning tool 9 is used. Four titanium aluminum composite strips 1 and aluminum plate 3 are placed in the welding positioning tool 9 for positioning and fixing, and then the friction stir welding is performed.

### Example 3

This example is another preferred embodiment of a process for manufacturing titanium aluminum composite for mobile phone middle frame based on Example 1.

A process for manufacturing titanium aluminum composite for mobile phone middle frame, includes the following steps:
(1) double-side grinding of titanium aluminum composite strip with long-support (grinding to remove burrs): burrs located on the two outer sides of the junction of the two layers of titanium and aluminum are removed through grinding;
(2) straightening and cutting (fixed-length cutting): the titanium aluminum composite strip 1 is cut according to a set length to prepare three titanium aluminum composite strips 1 respectively;
(3) bending: the titanium aluminum composite strip 1 is bent so as to obtain two L-shaped titanium aluminum composite strips and one U-shaped titanium aluminum composite strip;
(4) forging (dressing): the front and rear surfaces of the bending-type titanium aluminum composite strip 7 located at the bending portion are dressed to remove a thickened portion of a bending portion thickness caused by bending;
(5) first CNC machining: the upper and lower surfaces of the three bending-type titanium aluminum composite strips 7 are ground and smoothed, and subjected to CNC machining to prepare a finished bending-type titanium aluminum composite strip 7 product;
(6) assembly welding: the three titanium aluminum composite strips 1 and the aluminum plate 3 are assembled and combined so that the three titanium aluminum composite strips are spliced on the outer periphery of the aluminum plate to form a frame at the outer periphery of the aluminum plate to form a splicing assembly of the mobile phone middle frame. Then, the titanium aluminum composite strips and the aluminum plate which are connected to each other in the splicing assembly are welded and fixed together using friction stir welding to obtain an assembly welded body of the mobile phone middle frame; and
(7) second CNC machining: the upper and lower surfaces of the assembled welded body are polished and smoothed, and CNC machining is performed to prepare the finished mobile phone middle frame.

Preferably, in the bending of step (3), the machining equipment used therein is a punch press. Preferably, in the forging (dressing) of step (4), the machining equipment used is an oil press. Preferably, during the assembly welding of step (6), the friction stir welding is performed by welding from a friction stir welding starting position from 15 mm below the joint between the L-shaped titanium aluminum composite strip and the U-shaped titanium aluminum composite strip, welding a ring along the periphery of the joint between the frame of the mobile phone middle frame and the inner side plate of the mobile phone middle frame, and then withdrawing the welding from the splicing joint or withdrawing from the aluminum plate 3 as a removal area of the subsequent CNC machining.

In the present example, in the assembly welding of step (6), a welding positioning tool 15 is used. Three titanium aluminum composite strips 1 and aluminum plate 3 are placed in the welding positioning tool 15 for positioning and fixing, and then the friction stir welding is performed.

### Example 4

A process for manufacturing a double-layer composite for a mobile phone middle frame, including using a double-layer composite strip formed by connecting two layers of composites of non-aluminum material and aluminum material as a frame 2 of a mobile phone middle frame, and using an aluminum plate 3 as an inner side plate connected in the frame 2 of the mobile phone middle frame. The non-aluminum material layer in the double-layer composite strip is located outside the frame 2 of the mobile phone middle frame, and the aluminum layer 5 in the double-layer composite strip is located inside the frame 2 of the mobile phone middle frame. The frame 2 of the mobile phone middle frame is a combined frame formed by splicing a plurality of double-layer composite strips. The plurality of double-layer composite strips include at least one bending-type double-layer composite strip of U-shaped bending-type double-layer composite strips and L-shaped bending-type double-layer composite strips. After the bending-type double-layer composite strip is bent, a bending portion is subjected to dressing using a material-retained forging deformation dressing method, wherein the material-retained forging deformation dressing method is performed by forging deformation such that the thickened portion of the bending portion thickness caused by bending is removed by forging deformation while a constricted portion of an outer rounded surface of the bending portion caused by bending is compensated.

Preferably, the double-layer composite strip is a titanium aluminum composite strip 1.

### Example 5

A process for manufacturing a double-layer composite for a mobile phone middle frame, includes using a double-layer composite strip formed by connecting two layers of composites of non-aluminum material and aluminum material as a frame 2 of the mobile phone middle frame, and using an aluminum plate 3 as an inner side plate connected in the frame 2 of the mobile phone middle frame. The non-aluminum material layer in the double-layer composite strip is located outside the frame 2 of the mobile phone middle frame, and the aluminum layer 5 in the double-layer composite strip is located inside the frame 2 of the mobile phone middle frame. The frame 2 of the mobile phone middle frame is connected to the inner side plate of the mobile phone middle frame by welding. After the inner side plate of the mobile phone middle frame is welded, the inner side plate of the mobile phone middle frame is subjected to a stress relieving treatment by an inner panel deforming under pressure to create grooves method, wherein the inner panel deforming under pressure to create grooves method includes: applying pressure on the front and back surfaces of the inner side plate of the double-layer composite for the mobile phone middle frame by using a molding head with a plurality of strip-shaped protrusions, and deforming the front and back surfaces of the inner side plate under pressure to create a plurality of recessed grooves.

Preferably, the double-layer composite strip is a titanium aluminum composite strip 1.

The above are only the preferred embodiments of the present invention. It should be pointed out that for ordinary technical personnel in this field, a plurality of improvements and embellishments can be made without departing from the technical principle of the present invention. These improvements and embellishments should also be considered as the scope of protection of the present invention.

## Claims

1. A process for manufacturing a titanium aluminum composite for a mobile phone middle frame, **characterized by** comprising using a titanium aluminum composite strip formed by connecting two layers of composites of titanium and aluminum as a frame of the mobile phone middle frame, and using an aluminum plate as an inner side plate connected in the frame of the mobile phone middle frame; wherein the titanium layer in the titanium aluminum composite strip is located outside the frame of the mobile phone middle frame, and the aluminum layer in the titanium aluminum composite strip is located inside the frame of the mobile phone middle frame; and the frame of the mobile phone middle frame is connected to the inner side plate of the mobile phone middle frame by friction stir welding.

2. The process for manufacturing the titanium aluminum composite for the mobile phone middle frame according to claim 1, **characterized in that** the friction stir welding (FSW) uses the following comprehensive process measures: the moving speed F value of local welding parameters when a stirring pin moves to a region where the titanium aluminum composite strips are spliced decreases to 80-150 mm/min; the local welding trajectory is close to an outer side frame where the cracks easily occur by 0.5-1.2 mm, while avoiding the contact between the stirring pin and titanium; a main shaft of friction stir welding equipment rotates counterclockwise, and a welding trajectory is fed counterclockwise; the product is preheated to 100-200°C; the forging pressure is increased in the welding process, and the pressure is controlled at 0.5-1.5 tons.

3. The process for manufacturing the titanium aluminum composite for the mobile phone middle frame according to claim 1, **characterized in that** the friction stir welding uses the following comprehensive process measures: the moving speed F value of local welding parameters when the stirring pin moves to the region where the titanium aluminum composite strips are spliced decreases to 80-150 mm/min; the local welding trajectory is close to an outer side frame where the cracks easily occur by 0.5 mm, while avoiding the contact between the stirring pin and titanium; a main shaft of the friction stir welding equipment rotates counterclockwise, and a welding trajectory is fed counterclockwise; the product is preheated to 100-200°C; the forging pressure is increased in the welding process, and the pressure is controlled at 0.9-1.1 tons.

4. The process for manufacturing the titanium aluminum composite for the mobile phone middle frame according to claim 2 or 3, **characterized in that** the frame of the mobile phone middle frame is a combined frame formed by splicing a plurality of titanium aluminum composite strips; the plurality of titanium aluminum composite strips comprise at least one bending-type titanium aluminum composite strip of U-shaped bending-type titanium aluminum composite strips and L-shaped bending-type titanium aluminum composite strips.

5. The process for manufacturing the titanium aluminum composite for the mobile phone middle frame according to claim 4, **characterized in that** the manufacturing of the titanium aluminum composite for the mobile phone middle frame at least comprises the following procedures in sequence: fixed-length cutting, bending, dressing, assembly welding, and machining; wherein the welding is friction stir welding, and the dressing comprising dressing front and rear surfaces of a bending portion of the bending-type titanium aluminum composite strip, and removing a thickened portion of a bending portion thickness caused by bending.

6. The process for manufacturing the titanium aluminum composite for the mobile phone middle frame according to claim 5, **characterized in that** the dressing is a material-retained forging deformation dressing method implemented without removing a metal material, wherein the material-retained forging deformation dressing method is performed by forging deformation such that the thickened portion of the bending portion thickness caused by bending is removed by forging deformation while a constricted portion of an outer rounded surface of the bending portion caused by bending is compensated.

7. The process for manufacturing the titanium aluminum composite for the mobile phone middle frame according to claim 6, **characterized in that** the specific steps of the material-retained forging deformation dressing method are as follows: an inner side surface of the bending-type titanium aluminum composite strip located at the bending portion is used as a positioning benchmark; the inner side surface of the bending-type titanium aluminum composite strip located at the bending portion is positioned against a positioning die adapted to the inner side surface of the bending portion; then, the front and rear surfaces of the bending portion of the bending-type titanium aluminum composite strip are flattened by forging, so that the thickened portion of the bending portion thickness caused by bending is removed by forging deformation while the constricted portion of the outer rounded surface of the bending portion caused by bending is compensated.

8. The process for manufacturing the titanium aluminum composite for the mobile phone middle frame according to claim 7, **characterized in that** the positioning die is provided with a positioning groove adapted to the bending portions of the bending-type titanium aluminum composite strips, and the material-retained forging deformation dressing method is performed by, after the bending portion of the bending-type titanium aluminum composite strip is positioned in the positioning groove of the positioning die, forging and flattening the front and rear surfaces of the bending portion of the bending-type titanium aluminum composite strip.

9. The process for manufacturing the titanium aluminum composite for the mobile phone middle frame according to claim 5, **characterized in that** during the friction stir welding process, when the stirring pin inserted into a welding seam on the friction stir welding equipment moves to the region where the titanium aluminum composite strips are spliced, the stirring pin is set to move at a slower speed.

10. The process for manufacturing the titanium aluminum composite for the mobile phone middle frame according to claim 5, **characterized in that** during the friction stir welding process, when the stirring pin inserted into the welding seam on the friction stir welding equipment moves to the region where the titanium aluminum composite strips are spliced, a movement trajectory of the stirring pin in the splicing region is provided with an offset amount in a direction perpendicular to the movement trajectory with respect to a movement trajectory of the stirring pin in other regions, and the offset amount is offset in a direction more toward a side of the region where the titanium aluminum composite strips are spliced.

11. The process for manufacturing the titanium aluminum composite for the mobile phone middle frame according to claim 5, **characterized in that** a double-side grinding procedure and a first CNC machining procedure are provided in sequence after the dressing and before the assembling; the machining after welding comprises a second CNC machining; a stress relieving treatment procedure and a double-side grinding procedure are successively provided after welding and before the second CNC machining; the double-side grinding is performed using a double-side grinding equipment; and the stress relieving treatment procedure comprises performing a stress relieving treatment by means of a solid solution and aging heat treatment.

12. The process for manufacturing the titanium aluminum composite for the mobile phone middle frame according to claim 5, **characterized in that** the stress relieving treatment process comprises a stress relieving treatment achieved by an inner panel deforming under pressure to create grooves method, wherein the inner panel deforming under pressure to create grooves method comprises: applying pressure on the front and back surfaces of the inner side plate of the titanium aluminum composite for the mobile phone middle frame by using a molding head with a plurality of strip-shaped protrusions, and deforming the front and back surfaces of the inner side plate under pressure to create a plurality of recessed grooves.

13. The process for manufacturing the titanium aluminum composite for the mobile phone middle frame according to claim 12, **characterized in that** the plurality of recessed grooves form a combination of vertical and horizontal grooves.

14. The process for manufacturing the titanium aluminum composite for the mobile phone middle frame according to claim 5, **characterized in that** during welding, the friction stir welding is performed by welding from a friction stir welding starting position at a splicing joint adjacent to the titanium aluminum composite strip, welding a ring along the periphery of the joint between the frame of the mobile phone middle frame and the inner side plate of the mobile phone middle frame, and then withdrawing the welding from the splicing joint or withdrawing from the aluminum plate as a removal area of the subsequent CNC machining.

15. The process for manufacturing the titanium aluminum composite for the mobile phone middle frame according to claim 5, **characterized in that** during welding, a welding positioning tool is used; wherein the plurality of titanium aluminum composite strips and aluminum plate are placed in the welding positioning tool for positioning and fixing, and then, the friction stir welding is performed.

16. The process for manufacturing the titanium aluminum composite for the mobile phone middle frame according to claim 15, **characterized in that** the welding positioning tool comprises a base and a positioning groove provided on the upper plane of the base; and the splicing assembly of the mobile phone middle frame is integrally positioned in the positioning groove of the base.

17. The process for manufacturing the titanium aluminum composite for the mobile phone middle frame according to claim 16, **characterized in that** a first annular groove is provided in the groove bottom plane of the positioning groove of the base and directly opposite to the welding seam, and a friction stir welding temperature equalization compensator for heating the back of the welding seam to equalize the temperature of the upper and lower positions of the welding seam part is provided in the first annular groove.

18. The process for manufacturing the titanium aluminum composite for the mobile phone middle frame according to claim 17, **characterized in that** the friction stir welding temperature equalization compensator comprises an annular magnetizer mounted in the first annular groove and adapted to the first annular groove, a second annular groove opened on the annular magnetizer and opened upwards, and an annular copper pipe arranged in the second annular groove, wherein the annular copper pipe is provided with a slit for breaking the annular copper pipe, and a plug piece is arranged at a mouth of the slit of the annular copper pipe; a pair of electrode copper pipes are led out downwards at two side parts of the annular copper pipes near the slit; the inside of the electrode copper pipes is in communication with the inside of the annular copper pipes; the pair of electrode copper pipes pass downwards through the base and are externally connected with a power frequency power supply; and cooling circulating water is provided inside the electrode copper pipes.

19. A process for manufacturing a double-layer composite for a mobile phone middle frame, **characterized by** comprising using a double-layer composite strip formed by connecting two layers of composites of non-aluminum material and aluminum material as a frame of the mobile phone middle frame, and using an aluminum plate as an inner side plate connected in the frame of the mobile phone middle frame; wherein the non-aluminum material layer in the double-layer composite strip is located outside the frame of the mobile phone middle frame, and the aluminum layer in the double-layer composite strip is located inside the frame of the mobile phone middle frame; and the frame of the mobile phone middle frame is a combined frame formed by splicing a plurality of double-layer composite strips; the plurality of double-layer composite strips comprise at least one bending-type double-layer composite strip of U-shaped bending-type double-layer composite strips and L-shaped bending-type double-layer composite strips; wherein after the bending-type double-layer composite strip is bent, a bending portion is subjected to dressing using a material-retained forging deformation dressing method, wherein the material-retained forging deformation dressing method is performed by forging deformation such that the thickened portion of the bending portion thickness caused by bending is removed by forging deformation while a constricted portion of an outer rounded surface of the bending portion caused by bending is compensated.

20. The process for manufacturing a titanium aluminum composite for a mobile phone middle frame according to claim 19, **characterized in that** the double-layer composite strip is a titanium aluminum composite strip.

21. A process for manufacturing a double-layer composite for a mobile phone middle frame, **characterized by** comprising using a double-layer composite strip formed by connecting two layers of composites of non-aluminum material and aluminum material as a frame of the mobile phone middle frame, and using an aluminum plate as an inner side plate connected in the frame of the mobile phone middle frame; wherein the non-aluminum material layer in the double-layer composite strip is located outside the frame of the mobile phone middle frame, and the aluminum layer in the double-layer composite strip is located inside the frame of the mobile phone middle frame; and the frame of the mobile phone middle frame is connected to the inner side plate of the mobile phone middle frame by welding; wherein after the inner side plate of the mobile phone middle frame is welded, the inner side plate of the mobile phone middle frame is subjected to a stress relieving treatment by an inner panel deforming under pressure to create grooves method, wherein the inner panel deforming under pressure to create grooves method comprises: applying pressure on the front and back surfaces of the inner side plate of the double-layer composite for the mobile phone middle frame by using a molding head with a plurality of strip-shaped protrusions, and deforming the front and back surfaces of the inner side plate under pressure to create a plurality of recessed grooves.

22. The process for manufacturing a titanium aluminum composite for a mobile phone middle frame according to claim 21, **characterized in that** the double-layer composite strip is a titanium aluminum composite strip.
